# EUROPEAN PATENT APPLICATION

(11) **EP 4 610 123 A1**
(43) Date of publication of application: **03.09.2025**
(21) Application number: 24159851.5
(22) Date of filing: 27.02.2024
(51) Int. Cl.: B60T 17/00, B01D 46/00, B01D 53/04, B01D 53/26

(54) **AIR DRYER CARTRIDGE, OIL FILTER, KIT, AIR DRYER, AND METHOD OF ASSEMBLING AN AIR DRYER**

(71) Applicant: ZF CV Systems Europe BV, 1170 Brüssel (BE)
(72) Inventor: SEMENIUK, Maciej, 58-506 Jelenia-Gora (PL)
(74) Representative: Schäferjohann, Volker

(57) **Abstract**

An air dryer cartridge (10) comprises a desiccant container (20) and a desiccant (39) contained in the desiccant container (20). The desiccant container (20) comprises a wall (25) forming an oil filter receptacle (31) recessed into the desiccant container (20). The air dryer cartridge (10) comprises an insertion opening (36) for insertion of at least a portion of an oil filter (40) into the oil filter receptacle (31).

## Description

The invention relates to an air dryer for a vehicle, such as a commercial vehicle. The invention relates in particular to components of an air dryer that allow the air dryer to be configured for use in association with a compressor that is oil-lubricated.

Pneumatic systems are used on vehicles in a wide variety of applications, including gas supply systems, air dryer systems, pneumatic suspension, pneumatic levelling, and/or braking systems. Often, pneumatic systems are configured in such a way that a compressor has an intake configured to suck in ambient air and to compress the air to provide pressure gas for use by one or several pneumatic consumers. To reduce the risk of pneumatic consumer degradation caused by humidity in the compressed air, the pneumatic system may comprise an air dryer. An air dryer generally comprises a desiccant in a desiccant container, which desiccant container is arranged in an air dryer cartridge that can be assembled with an air dryer body.

Many vehicle systems comprise an oil-lubricated compressor. Oil entrained in the air received by an air dryer from such a compressor has the potential to negatively impact longevity of the desiccant bed in the air dryer cartridge. In such cases, it is desirable to provide an oil filter. A configuration in which an oil filter is provided as a separate component interconnected between the compressor and the oil filter increases the complexity of installation.

Air dryer cartridges comprising an integrated oil filter provide ease of installation and use. US 2018/257025 A1 discloses a desiccant cartridge for drying and de-oiling a gaseous fluid. The desiccant cartridge comprises a housing and an inner pot in the housing. In the inner pot, both an oil separating medium for oil particles contained in the fluid and a desiccant for drying the gaseous fluid are arranged one after another in the direction of the housing longitudinal axis. Such a configuration provides ease of installation and use. However, the oil filter is integrated into the inner pot that contains the desiccant and, thus, remains positioned in the flow path even when the air dryer cartridge is used in association with a compressor that is not oil-lubricated.

There is a need in the art for air dryer components that allow an oil filter to be selectively installed when an air dryer cartridge is to be used in an application where oil filtering is required, while allowing the oil filter to be omitted when the air dryer cartridge is to be used in an application where oil filtering is not required. There is also a need for such air dryer components that provide ease of installation. There is also a need for improved air dryers, kits, pneumatic systems, vehicles, and methods useful in association with such air dryer components.

The problem underlying the invention resides in addressing the need for an improved air dryer component that allows an air dryer cartridge to be selectively used in association with an oil filter, while providing operability also when the oil filter is not installed and while providing ease of installation. The invention also addresses the need for air dryers, kits, pneumatic systems, vehicles, and methods useful in association with such air dryer components.

According to aspects of the invention, an air dryer cartridge, an oil filter, a kit, an air dryer, a pneumatic system for a vehicle, a commercial vehicle, and a method of assembling an air dryer are provided. The dependent claims define embodiments.

According to an aspect, an air dryer cartridge is provided. The air dryer cartridge comprises a desiccant container, wherein the desiccant container has a container axis; and a desiccant contained in the desiccant container. The desiccant container comprises a wall forming an oil filter receptacle recessed into the desiccant container. The wall forming the oil filter receptacle comprises a first wall surface, a second wall surface offset from the first wall surface in a direction transverse to the first wall surface, and a cartridge gas inlet comprising through-openings extending from the first wall surface to the second wall surface to allow a gas flow to pass, in pumping mode operation of the air dryer cartridge, from the oil filter receptacle into the desiccant container. The air dryer cartridge comprises an insertion opening for insertion of at least a portion of an oil filter into the oil filter receptacle.

Various effects are attained by the air dryer cartridge. The oil filter receptacle is provided in the air dryer cartridge, allowing the oil filter to be disposed such that it extends into the air dryer cartridge when installed. Thereby, the oil filter can be integrated within an air dryer in a compact construction that provides ease of installation. The oil filter receptacle is formed by the wall of the desiccant container so as to be recessed into the desiccant container (i.e., the oil filter receptacle is formed exteriorly of the desiccant container wall by an indentation of the wall of the desiccant container), with the insertion opening of the air dryer cartridge allowing the oil filter to be positioned so as to project into the oil filter receptacle. Thus, the oil filter can be inserted into the receptacle at a location that is upstream (along a gas flow direction in pumping mode operation) of the desiccant container wall,. Thereby, ease of installation is attained while allowing the oil filter to be installed selectively dependent on whether oil filtering is to be performed. The oil filter can be retrofit without having to open the desiccant container.

The oil filter receptacle may comprise a cylindrical or frustoconical depression formed in the desiccant container and extending around the desiccant container axis, wherein the through-openings comprise through-openings formed through a wall surface of the cylindrical or frustoconical depression.

Thereby, the air dryer cartridge is configured such that the desiccant container can receive the gas flow from the oil filter receptacle, irrespective of whether or not the oil filter is installed so as to project into the oil filter receptacle. The wall surface of the cylindrical or frustoconical depression provides a curved surface through which the gas flow can enter into the desiccant contained in the desiccant container. Thereby, a compact construction is attained.

The wall forming the oil filter receptacle may comprise a tubular wall portion extending around the desiccant container axis. The tubular wall portion may comprise the through-openings.

Thereby, the air dryer cartridge is configured such that the desiccant container can receive the gas flow from the oil filter receptacle, irrespective of whether or not the oil filter is installed so as to project into the oil filter receptacle. The tubular wall portion provides a curved surface through which the through-passages are formed to allow the gas flow can enter into the desiccant contained in the desiccant container. Thereby, a compact construction is attained, with the area of the tubular wall portion being large relative to the dimensions occupied by the oil filter receptacle.

The tubular wall portion may have a cylindrical or frustoconical shape.

Thereby, the tubular wall portion provides a curved surface through which the through-passages are formed to allow the gas flow can enter into the desiccant, without adversely affecting insertion of the oil filter into the oil filter receptacle.

The oil filter receptacle may have a height, measured along the desiccant container axis, which exceeds a diameter, measured transverse to the desiccant container axis, of the oil filter receptacle.

Thereby, the air dryer cartridge is configured to allow oil filtering to be performed in an efficient manner using a configuration in which the cartridge gas inlet, the insertion opening, and the oil filter receptacle are positioned along the desiccant container axis, while being operative for air drying even without the oil filter installed. This facilitates positioning of the oil filter receptacle so as to allow insertion of the oil filter through the insertion opening, while providing operability of the air dryer cartridge both when the oil filter is installed and when it is not installed.

The oil filter receptacle have a radius, measured transverse to the desiccant container axis, which is less than a radius of the desiccant container, e.g. less than 0.5 or less than 0.4 times the radius of the desiccant container, which is measured transverse to the desiccant container axis.

Thereby, the oil filter receptacle can be formed by an indentation in the desiccant container which is positioned in a radially central region of the desiccant container. Thus, the air dryer cartridge is configured to allow oil filtering to be performed in an efficient manner using a configuration in which the cartridge gas inlet, the insertion opening, and the oil filter receptacle are positioned along the desiccant container axis, while being operative for air drying even without the oil filter installed. This provides a compact and efficient construction of an air dryer cartridge that is operative both with and without oil filter, while allowing the oil filter to be readily installed by projecting it into the oil filter receptacle through the insertion opening.

The desiccant container may comprise an outer wall portion extending coaxially around the wall forming the oil filter receptacle, e.g. around the tubular wall portion of the wall forming the oil filter receptacle.

Thereby, the oil filter receptacle can be formed by an indentation in the desiccant container which is positioned in a radially central region of the desiccant container. This provides a compact and efficient construction of an air dryer cartridge that is operative both with and without oil filter, while allowing the oil filter to be readily installed by projecting it into the oil filter receptacle through the insertion opening.

The tubular wall portion may comprise a wall engagement structure engaged with a further wall element of the desiccant container.

Thereby, the functionality of the air dryer cartridge, i.e., operability both with and without oil filter and ease of installation of the oil filter in the air dryer, can be attained using a desiccant container configuration that can be efficiently manufactured. In particular, the wall forming the oil filter receptacle projecting into a volume surrounded by the desiccant can be manufactured separately from the further wall element with which it is engaged. Thus, the wall forming the oil filter receptacle can be manufactured with its desired characteristics, such as gas permeability, while allowing engagement with the adjacent further wall element that may be gas impermeable.

The wall engagement structure may be configured for form-fitting engagement with a mating wall engagement structure of the further wall element.

Thereby, the functionality of the air dryer cartridge, i.e., operability both with and without oil filter and ease of installation of the oil filter in the air dryer, can be attained using a desiccant container configuration that can be efficiently manufactured.

The tubular wall portion may be integrally formed with a further wall portion of the desiccant container that extends transverse to the desiccant container axis and/or that extends circumferentially around the desiccant container axis.

Thereby, ease of assembly is attained.

The wall forming the oil filter receptacle may be in direct contact with the desiccant.

Thereby, the oil filter receptacle is positioned such that the wall forming the oil filter receptacle fluidly communicates the oil filter receptacle that is outside of the enclosure formed by the walls of the desiccant container with the desiccant contained in the desiccant container.

The desiccant may circumferentially surround at least a portion of the oil filter receptacle.

Thereby, the air dryer cartridge is configured such that the gas flow can enter the desiccant in a direction transverse to the desiccant cartridge axis. This provides an efficient configuration in which the gas flow can enter the desiccant over an area that is large given the dimensions of the oil filter receptacle.

The desiccant container may comprise an axial end wall portion extending transverse to the desiccant container axis and a further axial end wall portion extending transverse to the desiccant container axis, wherein the wall forming the oil filter receptacle extends from the further axial end wall portion towards the axial end wall portion.

Thereby, the oil filter receptacle positioned exterior of the desiccant container can extend within an outer envelope of the desiccant container, providing a compact construction for an air dryer cartridge operable both with and without an oil filter installed to project into the oil filter receptacle.

The wall forming the oil filter receptacle may be configured to sealingly engage the oil filter.

Thereby, the wall forming the oil filter receptacle can ensure that, when the air dryer cartridge is used in an air dryer comprising the oil filter, all gas received by the air dryer cartridge must pass through the oil filter prior to entering the desiccant container. Thereby, efficient oil removal can be assured.

Alternatively or additionally, the wall forming the oil filter receptacle may be configured retain the oil filter.

Thereby, the air dryer cartridge is configured to mechanically secure the oil filter when used in an air dryer comprising the oil filter. This may be done by a force fit, a friction fit (e.g., a threaded engagement), or a form fit.

The wall forming the oil filter receptacle may be configured to retain the oil filter by a force fit, e.g., by a friction fit.

Thereby, the air dryer cartridge is configured to mechanically secure the oil filter when used in an air dryer comprising the oil filter, while allowing the oil filter to be inserted into the oil filter receptacle in a simple manner.

The air dryer cartridge may comprise a housing in which the desiccant container is arranged. The housing may be spaced from at least an outer circumferential wall portion of the desiccant container by a gap that forms a passage through which the gas flow passes to a gas outlet during pumping operation. The housing may comprise the insertion opening.

Thereby, the air dryer cartridge provides a configuration in which, during pumping operation, the gas flow is direct from the cartridge gas inlet positioned around the desiccant container axis through the oil filter receptacle into the desiccant and, after passage through the desiccant, through the passage formed between the outer circumferential wall portion of the desiccant container and the housing of the air dryer cartridge towards the gas outlet. This configuration facilitates positioning of the oil filter, when needed, and operability both with and without oil filter, while affording ease of assembly.

The housing of the air dryer cartridge may comprise a cartridge end structure extending generally transverse to the axis of the desiccant container, wherein the cartridge end structure comprises an engagement structure for (e.g., threaded) engagement of the air dryer cartridge with an air dryer body, and wherein the cartridge end structure comprises the insertion opening to allow the oil filter to project into the oil filter receptacle.

Thereby, the air dryer cartridge is configured to facilitate positioning of the oil filter, when needed, and to provide operability both with and without the oil filter, while affording ease of assembly.

The air dryer cartridge may be an air dryer cartridge configured for use both with and without the oil filter projecting into the oil filter receptacle.

Thereby, the air dryer cartridge is useful for operation in association with both an oil-lubricated compressor and a compressor that is not oil-lubricated.

The air dryer cartridge may be configured to receive a portion of the oil filter according to an aspect or embodiment in the oil filter receptacle.

According to a further aspect, there is provided an oil filter for an air dryer. The oil filter comprises an oil filter housing comprising an oil filter inlet and an oil filter outlet, the oil filter housing having a filter housing axis; an oil filter element configured to remove oil from a gas flow passing from the oil filter inlet to the oil filter outlet; and a sealing structure. The oil filter is configured for insertion into an oil filter receptacle formed by a desiccant container of the air dryer. The sealing structure extends circumferentially around the filter housing axis and is configured to seal against a wall surface of the air dryer cartridge and/or against an air dryer body of the air dryer.

Various effects are attained by the oil filter. The oil filter is configured to be inserted into the oil filter receptacle of the air dryer cartridge, such that the oil filter is specifically adapted for use in association with an air dryer cartridge comprising a desiccant container forming an oil filter receptacle. Thereby, the oil filter can be integrated within an air dryer in a compact construction that provides ease of installation. The sealing structure is operative to seal against the desiccant container and/or against an air dryer body, thereby ensuring that, in pumping mode operation, the gas flow passes through the oil filter when installed in the air dryer. This is of particular relevance when the oil filter is configured such that it is disposed externally of the desiccant container, to seal against at least one of the desiccant container and the air dryer body.

The oil filter element may be curved around the filter housing axis.

Thereby, the oil filter is configured to perform oil filtering that is large given the volume occupied by the oil filter.

The oil filter element may comprise at least a filter element portion having a cylindrical or frustoconical shape.

Thereby, the oil filter is configured to perform oil filtering that is large given the volume occupied by the oil filter.

The oil filter housing may comprise a tubular filter housing portion that extends around the filter housing axis. The tubular filter housing portion may comprise an inner filter housing component comprising the oil filter inlet, the oil filter inlet comprising apertures for passage of gas from the oil filter inlet to the oil filter element. The tubular filter housing portion may comprise an outer filter housing component comprising the oil filter outlet, the oil filter outlet comprising further apertures for passage of gas from the oil filter element to the air dryer cartridge. The inner and outer filter housing components may be secured to each other or may be integrally formed. The filter housing may optionally comprise an end cap at an end of the tubular filter housing portion which may be engaged with or integral with the inner and outer filter housing components.

Thereby, the oil filter is configured such that the oil filter comprises the apertures and the further apertures to allow a transverse gas flow (i.e. a gas flow transverse to the filter housing axis) to pass through the oil filter and into the desiccant bed.

The apertures and the further apertures may be aligned with each other.

Thereby, the oil filter provides a low gas flow resistance.

The apertures and the further apertures may be distributed around the circumference of the tubular filter housing with constant or varying angular spacing.

Thereby, the oil filter is configured such that the oil filter gas outlet comprises the apertures to allow a radial gas flow (i.e. a gas flow transverse to the filter housing axis) to pass through the oil filter around its circumference and into the desiccant bed.

The oil filter may comprise an oil filter retaining structure configured to engage with the desiccant container and/or the air dryer body.

Thereby, the oil filter can be mechanically secured to the desiccant container and/or the air dryer body without requiring separate mounting components. This provides ease of assembly.

The oil filter may be configured for being inserted into the oil filter receptacle of the air dryer cartridge according to an aspect or embodiment.

Thereby, the oil filter is configured for use in association with the air dryer cartridge according to an aspect or embodiment, allowing the oil filter to be selectively used in association with the air dryer cartridge when oil filtering is required.

The oil filter may be configured such that, when inserted into the oil filter receptacle, all of the oil filter element may be received in the oil filter receptacle and at least a portion of the oil filter (e.g., a portion of the oil filter housing) projects from the oil filter receptacle.

Thereby, the oil filter is configured to provide efficient oil filtering of a gas flow exiting the oil filter in a transverse direction (i.e., transverse to the filter housing axis), while allowing the oil filter to be engaged with an air dryer body prior to its insertion into the oil filter receptacle.

According to a further aspect, there is provided an air dryer body comprising an air cartridge retaining structure (such as a first thread) configured for engagement with the air dryer cartridge according to an aspect or embodiment, the air dryer body further comprising an oil filter retaining structure (such as a second thread) configured for engagement with the oil filter according to an aspect or embodiment.

Such an air dryer body is configured for use in association with the air dryer cartridge and the oil filter. The air dryer body is configured to operate in association with the air dryer cartridge, irrespective of whether or not oil filter is installed.

According to a further aspect, there is provided a kit which comprises the air dryer cartridge according to an aspect or embodiment, and an oil filter configured to be inserted into the oil filter receptacle. The oil filter may be the oil filter according to an aspect or embodiment.

According to a further aspect, there is provided a kit which comprises the oil filter according to an aspect or embodiment, and an air dryer cartridge comprising an oil filter receptacle, wherein the oil filter is configured to be inserted into the oil filter receptacle. The air dryer cartridge may be the air dryer cartridge according to an aspect or embodiment.

The kit provides the effect of a modular air dryer configuration in which the oil filter is a separate component from the air dryer cartridge, while being configured for insertion into the oil filter receptacle of the air dryer cartridge.

According to a further aspect, there is provided an air dryer, comprising an air dryer body and the desiccant container of an aspect or embodiment, wherein the desiccant container is mounted to the air dryer body.

Various effects and advantages are associated with the air dryer. The air dryer is operable both with and without oil filter installed therein, allowing the air dryer to be configured both for use in an air supply system comprising an oil-lubricated compressor and an air supply system comprising a compressor that is not oil-lubricated. The oil filter, if present, is arranged in such a way that it does not take up a too large volume portion within the air dryer cartridge.

The air dryer may further comprise the oil filter of an aspect or embodiment, wherein the oil filter is installed with at least a portion of the oil filter positioned in the oil filter receptacle of the air dryer cartridge.

Thereby, the air dryer is set up in such a manner that it is configured for use in association with an oil-lubricated compressor.

The air dryer may be a dual air dryer, comprising a further air dryer cartridge according to an aspect or embodiment mounted to the air dryer body, wherein the air dryer body comprises a switching valve switchable to select one of the air dryer cartridge and the further air dryer cartridge for drying air in pumping mode operation and/or for regeneration in regeneration mode operation.

Thereby, the compact construction of the air dryer cartridge is harnessed in association with a dual air dryer (also referred to as twin air dryer in the art). The small volume required for the oil filter receptacle along the desiccant container axis renders the air dryer cartridge particularly suitable for use in a dual air dryer.

The dual air dryer may comprise a further oil filter according to an aspect or embodiment, wherein the further oil filter is installed with at least a portion of the further oil filter positioned in the oil filter receptacle of the further air dryer cartridge.

According to a further aspect, there is provided a pneumatic system for a vehicle, in particular for a commercial vehicle, comprising a compressor, the air dryer according to an aspect or embodiment, and a fluid connection directly connected to the compressor and the air dryer.

Thereby, the effects and advantages provided by the air dryer cartridge and the air dryer are utilized in a pneumatic vehicle system.

The compressor may be an oil-lubricated compressor, wherein the air dryer comprises at least one oil filter according to an aspect or embodiment.

Thereby, the effects and advantages provided by insertion of the oil filter into the oil filter receptacle to provide oil filtering upstream (in pumping mode operation) of the desiccant cartridge are attained in the vehicle system. In particular, oil may be removed efficiently while reducing the risk of oil-induced desiccant degradation.

The compressor may be a compressor that is not oil-lubricated, wherein the air dryer cartridge is engaged with the air dryer body with an empty oil filter receptacle (i.e., with no oil filter installed on the air dryer body and the air dryer cartridge).

Thereby, the air dryer takes advantage of the modular configuration that allows the oil filter to be omitted, without adversely affecting operability of the air dryer cartridge, when no oil filtering is required.

According to another aspect, there is provided a commercial vehicle, comprising the air dryer cartridge and/or the oil filter, the air dryer, or the pneumatic system according to an aspect or embodiment.

Thereby, a commercial vehicle is provided in which the effects and advantages of the air dryer cartridge and/or the oil filter, the air dryer, or the pneumatic system are realized.

According to a further aspect of the invention, there is provided a method of assembling an air dryer, the method comprising: attaching an oil filter to an air dryer body; and attaching an air dryer cartridge to the air dryer body such that at least a portion of the oil filter is received in an oil filter receptacle formed by a wall of a desiccant container of the air dryer cartridge.

Various effects are attained by the assembly method. The method is operative to configure the air dryer for use with an oil-lubricated compressor, taking advantage of a modular configuration in which the oil filter is arranged externally of the desiccant container so as to project into the oil filter receptacle formed by the desiccant container.

The method may further comprise establishing a fluid connection between a compressor and the air dryer, and establishing a further fluid connection between the air dryer and at least one pneumatic consumer of a vehicle (e.g., of a commercial vehicle).

Thereby, the effects and advantages of the air dryer are attained in a pneumatic system of a vehicle.

The method may be performed using the air dryer cartridge and/or the oil filter according to an aspect or embodiment.

Thereby, the effects and advantages of the air dryer cartridge and/or the oil filter are harnessed in a pneumatic system of a vehicle.

Optional features of the method and the effects attained thereby correspond to the optional features and effects discussed in association with the air dryer cartridge, the oil filter, the air dryer, the pneumatic vehicle system, and the commercial vehicle.

According to another aspect, there is provided a method of providing gas to a pneumatic consumer of a vehicle (e.g., of a commercial vehicle). The method comprises receiving a gas flow by an air dryer, wherein the air dryer comprises the air dryer cartridge according to an embodiment, and passing, in pumping mode operation, the gas flow through the oil filter receptacle and into the desiccant contained in the desiccant container.

Various effects are attained by the method of providing gas to a pneumatic consumer. The oil filter receptacle is provided in the air dryer cartridge, allowing an oil filter to be disposed such that it extends into the air dryer cartridge when installed. Thereby, the oil filter can be integrated within an air dryer in a compact construction that provides ease of installation.

Passing the gas flow through the oil filter receptacle may comprise passing the gas flow through the oil filter element of an oil filter according to an aspect or embodiment.

Thereby, humidity in the air flow is reduced by the desiccant while mitigating the risk of oil-induced degradation of the desiccant, when the gas flow is provided by an oil-lubricated compressor.

Passing the gas flow through the oil filter receptacle may comprise passing the gas flow into the desiccant without performing oil filtering.

Thereby, humidity in the air flow is reduced by the desiccant when the gas flow is provided by a compressor that is not oil-lubricated.

Optional features of the method and the effects attained thereby correspond to the optional features discussed in association with the air dryer cartridge, the oil filter, the air dryer, the pneumatic vehicle system, and the commercial vehicle.

The method may be performed by or using the air dryer cartridge, the oil filter, the air dryer, the pneumatic vehicle system, and/or the commercial vehicle.

Further embodiments and configurations are defined by the dependent claims. These and other aspects of the invention will be apparent from and further explained with reference to the embodiments described herein with reference to the accompanying drawings, in which:
Fig. 1 is a cross-sectional view of an air dryer cartridge according to an embodiment of the invention;
Fig. 2 shows the cross-sectional view of Fig. 1 including a gas flow pattern;
Fig. 3 shows a partially broken-away perspective view of an air dryer according to an embodiment;
Fig. 4 is a partially broken-away perspective view of an air dryer body and the oil filter arranged thereon;
Fig. 5 is a partially broken-away perspective view of an air dryer in which the oil filter of Fig. 4 is assembled with an air dryer body and an air dryer cartridge;
Fig. 6 is a partially broken-away perspective view of an air dryer body and an oil filter according to a further embodiment arranged thereon;
Fig. 7 is a partially broken-away perspective view of an air dryer in which the oil filter of Fig. 6 is assembled with an air dryer body and an air dryer cartridge;
Fig. 8 is a schematic representation of a pneumatic system for a vehicle comprising an air dryer according to an embodiment;
Fig. 9 is a schematic representation of a pneumatic system for a vehicle comprising an air dryer according to an embodiment;
Fig. 10 is a schematic representation of a pneumatic system for a vehicle comprising an air dryer according to an embodiment;
Fig. 11 is a schematic representation of a pneumatic system for a vehicle comprising an air dryer according to an embodiment;
Fig. 12 is a schematic representation of a pneumatic system for a vehicle configured as a pneumatic or electropneumatic braking system comprising the air dryer according to an embodiment;
Fig. 13 is a schematic representation of a pneumatic system for a vehicle configured as a levelling system comprising the air dryer according to an embodiment;
Fig. 14 is a schematic representation of a pneumatic system for a vehicle configured as a gas spring system comprising the air dryer according to an embodiment;
Fig. 15 is a schematic representation of a commercial vehicle;
Fig. 16 is a flow chart of an assembly method;
Fig. 17 is a flow chart of an assembly method; and

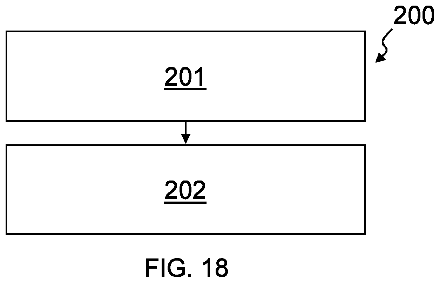

Fig. 18 is a flow chart of a method of exhausting gas.

Embodiments of the invention will be described with reference to the drawings. In the drawings, elements with similar or identical configuration and/or function are designated with similar or identical reference signs.

The invention relates to components of an air dryer and, more specifically, to an air dryer cartridge that can be used in association with an oil filter while remaining operative also when used without the oil filter. The air dryer cartridge comprises a desiccant in a desiccant container. The desiccant container comprises a wall forming an oil filter receptacle, allowing the oil filter to be positioned outside of the desiccant container and along a desiccant container axis of the desiccant container.

As used herein, the term "air dryer cartridge" refers to a component comprising a desiccant and configured to reduce air humidity of compressed air provided by a compressor. The air dryer cartridge may be configured to be engaged with and disengaged from an air dryer body in a reversible destruction-free manner.

As used herein, the term "desiccant container" refers to the container that is configured to contain the desiccant therein, with the desiccant being in direct contact with the desiccant container. Such a desiccant container is also referred to as inner container, inner housing, or inner pot of an air dryer cartridge. The desiccant container is positioned in a housing of the air dryer cartridge. A gas flow path may be defined between the desiccant container and the housing.

As used herein, the term "tubular" refers to a structure that extends circumferentially around an axis. The tubular structure may comprise cylindrical, frustoconical, or other surfaces. The term "tubular" is not limited to an elliptical or circular cylinder structure, but encompasses additional structures as long as they include a circumferentially extending wall, e.g., around an axis of the silencer fitting element.

As used herein, the term "desiccant container axis" refers to an axis around which a circumferential outer wall portion (in particular an air-impermeable outer wall portion) of the desiccant container extends circumferentially.

As used herein, the term "pumping mode operation" refers to operation in which the air dryer cartridge is operative to receive a gas flow generated by a compressor and provide the gas flow with reduced humidity for use by at least one pneumatic consumer or a pneumatic consumer system that comprises one or several pneumatic consumers. The air dryer and/or the air dryer cartridge may also be operative for "regeneration mode operation" in which a gas flow through the air dryer cartridge may generally be inverse as compared to the pumping mode operation. The terms gas inlet and gas outlet as used herein are used with reference to the pumping mode operation.

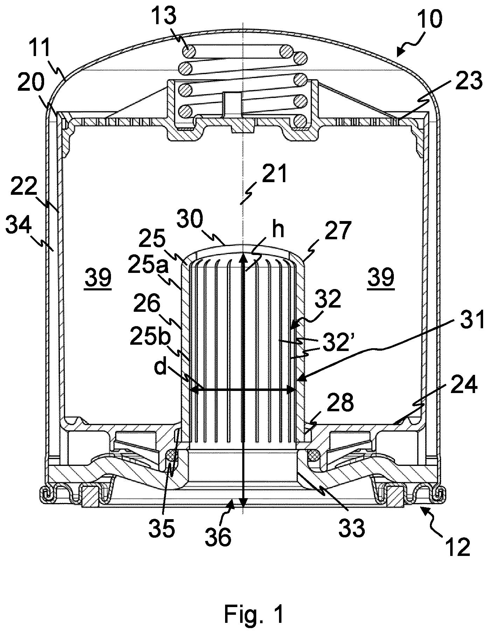

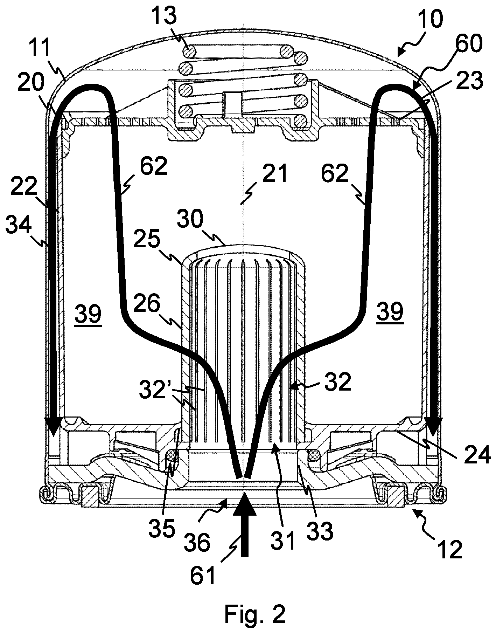

Fig. 1 is a cross-sectional view of an air dryer cartridge 10 according to an embodiment of the invention. Fig. 2 is a cross-sectional view of the air dryer cartridge 10 showing a gas flow pattern 60. The air dryer cartridge 10 comprises a housing 11, 12 which comprises an outer cap 11, such as a dome-shaped outer cap 11, and a cartridge end structure 12 engaged with the outer cap 11. The housing accommodates a desiccant container 20 in which a desiccant 39 is arranged. A bias member 13 may be interposed between the desiccant container 20 and the outer cap 11. The desiccant container 20 has a desiccant container axis 21. An outer desiccant container wall 22, which may be air-impermeable, may extend circumferentially around the desiccant container axis 21. The outer desiccant container wall 22 may be spaced from the outer cap 11 by a gap 34, which may extend circumferentially around the desiccant container axis 21. The gap 34 may form a gas flow path through which gas can flow, in pumping mode operation and after having passed through the desiccant 39, to a gas outlet for provision to a pneumatic consumer. The air dryer cartridge 10 is configured to receive a gas flow generated by a compressor at a cartridge gas inlet 32 that comprises a plurality of through-openings 32' disposed around the desiccant container axis 21. Thus, the cartridge gas inlet 32 is arranged in a radially central region of the desiccant container 20. The air dryer cartridge 10 is configured such that, in pumping mode operation, it receives a gas flow at the cartridge gas inlet 32, passes the gas flow through the desiccant 39 in the desiccant container 20, guides the gas flow after passage through the desiccant 39 along the gas flow path formed by the gap 34, and outputs the gas flow, with reduced humidity, through a cartridge gas outlet. The cartridge gas outlet may be provided, e.g., at the cartridge end structure 12.

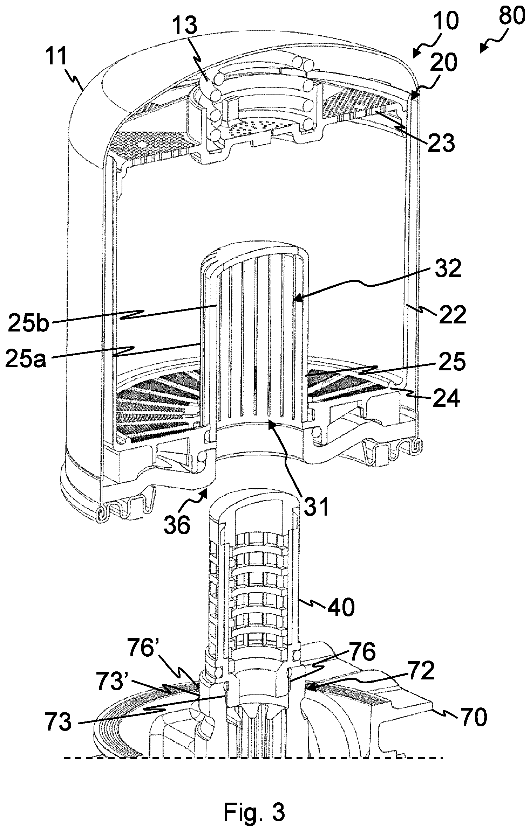

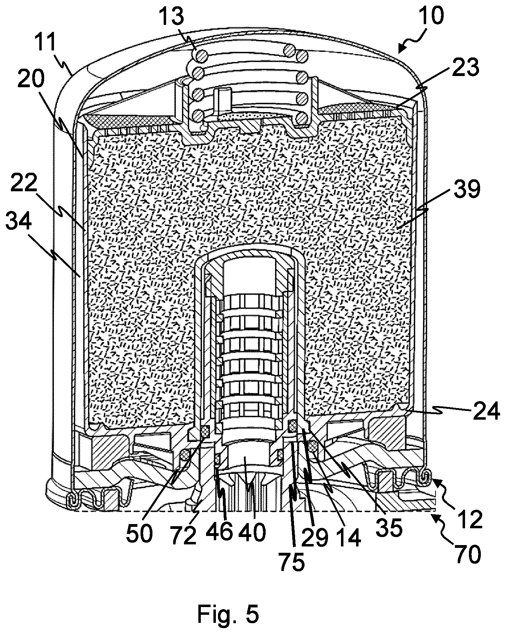

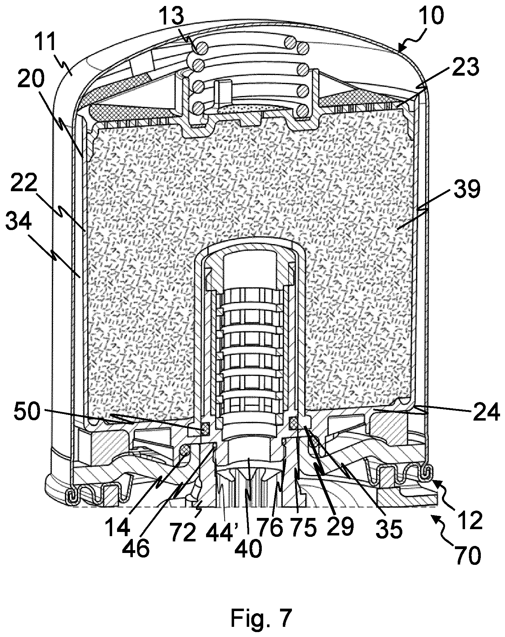

The air dryer cartridge 10 is configured to receive at least a portion of an oil filter 40 (shown in Fig. 3, Fig. 4, Fig. 5, Fig. 6, and Fig. 7) in an oil filter receptacle 31. The desiccant container 20 comprises a wall 25 forming the oil filter receptacle 31. The wall 25 is a non-planar wall to define the oil filter receptacle 31. To allow gas to flow from the oil filter receptacle 31 to the desiccant 39, at least part of the wall 25 is air-permeable. The wall 25 comprises the plurality of through-openings 32' extending from a first wall surface 25a of the wall 25 to a second wall surface 25b of the wall, with the second wall surface 25b being spaced from the first wall surface 25a in a direction transverse to the desiccant container axis 21 (due to the configuration and orientation of the wall 25). The wall 25 is arranged such that at least a portion of the wall 25 is circumferentially surrounded by the outer desiccant container wall 22. The wall 25 may comprise a tubular wall portion 26 that comprises the through-openings 32' as gas passages through which a gas flow can enter the desiccant cartridge 20. The through-openings 32' may be formed as slots extending along the desiccant container axis 21, with different slots being circumferentially spaced around the desiccant container axis 21, or may otherwise be air-permeable. The tubular wall portion 26 extends around the desiccant container axis 21, e.g., in a cylindrical or frustoconical shape. The tubular wall portion 26 may be concentrically arranged relative to the outer wall portion 22. The wall 25 comprises a curved end wall portion 30 that may but does not need to be air permeable. The curved end wall portion 30 extends from a first tubular wall portion end 27 of the tubular wall portion 26. An opposing second tubular wall portion end 28 is arranged at and may be engaged with (e.g., form-fittingly engaged with) a further wall portion 24 of the desiccant container 20. The further wall portion 24 may extend generally transverse to the desiccant container axis 21. The further wall portion 24 and the outer desiccant container wall 22 may be formed as a unitary structure, which may be air-impermeable. The further wall portion 24 may comprise a mating wall engagement structure 35 for mating engagement with a wall engagement structure 29 (shown in Fig. 5 and Fig. 7) of the wall 25 that forms the oil filter receptacle 31.

The air dryer cartridge 10 is configured such that the oil filter receptacle 31 is an elongate structure extending along the desiccant cartridge axis 21. The air dryer cartridge 10 may be configured such that the oil filter receptacle 31 has a receptacle height h, measured along the desiccant cartridge axis 21 between the curved end wall portion 31 and the axial end plane of the cartridge end structure 12 (i.e., the plane transverse to the desiccant cartridge axis that is tangential to the cartridge end structure 12). The receptacle height h may be at least 1.4 times, at least 1.5 times, or at least 1.6 times an inner diameter d of the oil filter receptacle 31, measured perpendicular to the desiccant container axis 21.

To allow placement of the oil filter 40 such that it projects into the oil filter receptacle 31, the air dryer cartridge 10 comprises an oil filter insertion opening 36. The oil filter insertion opening 36 allows the oil filter 40 to be positioned so as to project into the oil filter receptacle 31, without having to disengage the cartridge end structure 12 from the cap and without having to open the desiccant container 20. The air dryer cartridge 10 may be configured to allow the oil filter 40 to be positioned so as to project into the oil filter receptacle 31 by means of a translatory relative displacement between the air dryer cartridge 10 and the oil filter 40 along the desiccant container axis 21. The air dryer cartridge 10 may be configured to allow the oil filter 40 to be positioned so as to project into the oil filter receptacle 31 by means of a combined translatory displacement along the desiccant container axis 21 and rotation of the air dryer cartridge 10 around the desiccant container axis 21, so that the air dryer cartridge 10 receives at least a portion of the oil filter 40 in the oil filter receptacle 31 while the air dryer cartridge 10 is threaded to an air dryer body. Thus, the air dryer cartridge 10 may be configured to allow the oil filter 40 to be positioned so as to project into the oil filter receptacle 31 in a destruction-free manner, optionally in a destruction-free reversible manner in which the oil filter 40 can be placed so as to project into the oil filter receptacle 31 and can be removed again without causing damage to the air dryer cartridge 10 and the oil filter 40. The oil filter insertion opening 36 may be aligned with the desiccant container axis 21 and may be operative to pass the gas flow 61 to the cartridge gas inlet 32. The air dryer cartridge 10 may comprise an end structure wall 33 that forms or defines the oil filter insertion opening 36 and which may be operative to both guide the oil filter 40 as it is being inserted through the oil filter insertion opening 36 (when the air dryer cartridge 10 is used with the oil filter 40) and to guide gas towards the cartridge gas inlet 32 (when the air dryer cartridge 10 is used without the oil filter 40).

The desiccant container 20 comprises an end wall portion 23 that extends generally transverse to the desiccant container axis 21 and which is air-permeable. In pumping mode operation, the end wall portion 23 allows the gas flow to pass from the desiccant 39 through the end wall portion 23 and into the gas passage provided by the gap 34 between the desiccant container 20 and the outer cap 11. The end wall portion 23 may be a component that is formed separately from the unitary body that provides the further wall portion 24 and the outer desiccant container wall 22. The end wall portion 23 may be attached to an axial end rim of the outer desiccant container wall 22. The wall 25 forming the oil filter receptacle 31 is positioned and configured such that it extends from the further wall portion 24 (which extends generally transverse to the desiccant container axis 21 at one axial end of the desiccant container 20) towards the end wall portion 23 (which extends generally transverse to the desiccant container axis 21 at another axial end of the desiccant container 20). This allows the oil filter 40, if provided, to be arranged so as to extend into a volume that is circumferentially surrounded by both the outer desiccant container wall 22 and the tubular portion 25 of the wall 25 forming the oil filter receptacle 31.

Various modifications may be implemented in further embodiments. For illustration, the tubular wall portion 26 and the curved end wall portion 30 may be integrally formed as a unitary component (using, e.g., molding, such as injection molding). Alternatively or additionally, the engagement structure 35 and mating wall engagement structure 29 need not be used. The wall 25 forming the oil filter receptacle 31 may be formed integrally with at least the further wall portion 24, optionally also with the outer circumferential wall 22, and further optionally also with the end wall portion 23. In yet other implementations, the wall 25 may be attached to a unitary body comprising the further wall portion 24 and the outer circumferential wall 22, optionally also the end wall portion 23. The attachment may be implemented by means of a form fit (as illustrated), by means of a friction fit, by means of an adhesive, by means of ultrasonic welding, or by other attachment techniques.

The desiccant container 20 may be operative such that a seal is formed between the oil filter 40 and the desiccant container 20 in proximity to the second tubular wall portion end 28 when the oil filter 40 is provided. Thereby, the gas flow can be forced to pass through the oil filter 40 while minimizing or eliminating any bypass flow around the oil filter 40 when the oil filter 40 is installed. Alternatively or additionally, the oil filter 40 may be sealed against an air dryer body, as will be explained in more detail below. The air dryer cartridge 10 may be configured to mechanically retain the oil filter 40, e.g., by means of a form fit and/or a force fit.

Fig. 2 shows the air dryer cartridge 10 in a cross-sectional view when the oil filter 40 is not provided. Fig. 2 also shows a gas flow pattern 60. The air dryer cartridge 10 is configured in such a manner that it can be used both with and without oil filter 40. When the oil filter 40 is not provided, a gas flow 61 from the compressor passes through the oil filter receptacle 31, through the cartridge gas inlet 32 in the air-permeable tubular wall portion 26, and then on through the desiccant 39. The air dryer cartridge 10 is configured to receive, in pumping mode operation, an inlet gas flow 61 towards the cartridge gas inlet 32. The gas flow 61, 62 passes through a flow path which, in pumping mode operation, passes into the oil filter receptacle 31, then through the oil filter element receptacle 31 and the through-openings 32' of tubular wall portion 26 into the desiccant 39, and then through the passages in the end wall portion 23 and the gap 34 to a cartridge gas outlet. In regeneration mode operation (in which the desiccant 39 is regenerated), the gas flow through the air dryer cartridge 10 has the invert direction through the air dryer cartridge 10 and, if present, the oil filter 40.

Fig. 3 shows a cut-away, partially exploded perspective view of an air dryer 80. The air dryer 80 comprises the air dryer cartridge 10 according to an embodiment. The air dryer 80 comprises an air dryer body 70. The air dryer cartridge 10 is configured to be engaged, e.g., threadingly engaged, with the air dryer body 70. The air dryer body 70 comprises an air dryer body portion 72 that defines an air dryer body portion passage for providing the gas flow 61 to the air dryer cartridge 10. The air dryer body portion 72 comprises an oil filter retaining structure 76 (e.g., a thread, such as an inner thread) which may be provided on an inner surface 73 of the air dryer body portion 72. The air dryer body portion 72 comprises an air dryer cartridge retaining structure 76' (e.g., a further thread, such as an outer thread) which may be provided on an outer surface 73' of the air dryer body portion 72.

The air dryer 80 may optionally comprise the oil filter 40. The oil filter 40 may be selectively provided if the air dryer 80 is to be used in an application in which oil filtering is desired. The oil filter 40, if provided, can be inserted through the oil filter insertion opening 36 such that at least a portion of the oil filter 40 is receives in the oil filter receptacle 31.

Various effects and advantages are attained by the air dryer cartridge 10 and, if present, the oil filter 40. The air dryer cartridge 10 is configured such that it can be used with and without the oil filter 40, making it useful for a pneumatic supply system that comprises an oil-lubricated compressor and for another pneumatic supply system that comprises a compressor that is not oil-lubricated. This is attained by a configuration in which the oil filter 40 is positionable outside of volume around which the walls 22, 23, 24, 25 of the desiccant container 20 extend to retain the desiccant therein, and in which the oil filter 40 is insertable through the oil filter insertion opening 36 without any (partial or complete) disassembly of the air dryer cartridge 10. The configuration in which the cartridge gas inlet 32, the oil filter insertion opening 36, and the oil filter receptacle 31 are all positioned in a radially central region provides further benefits and advantages. The radially central region is a region surrounding the desiccant container axis 21 and having a radius smaller (e.g., less than 0.4 times or less than 0.5 times or less than 0.6 times) the radius of the outer desiccant container wall 22. In such a configuration, the oil filter receptacle 31 can be provided with a volume that is smaller than the volume that would be required for an oil filter placement proximate the outer wall 22 of the desiccant container 20, while enabling gas flow to pass into the desiccant 39 (and, if the oil filter 40 is installed, through the oil filter element) through through-openings 32' provided in a curved structure such as the tubular wall portion 26 (and, if the oil filter 40 is installed, a curved filter element) that provide a large area relative to the volume that they occupy.

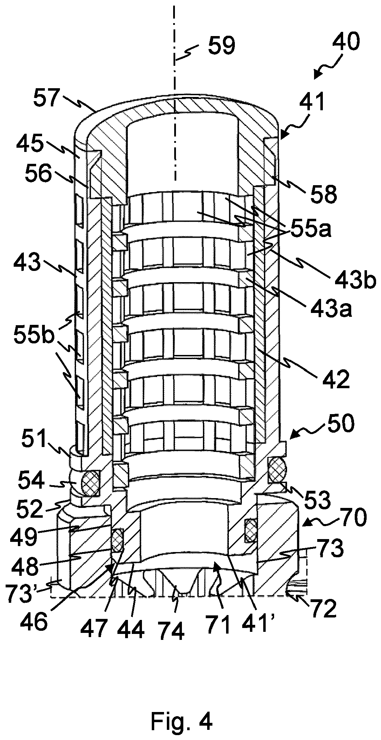

Fig. 4 shows a partially broken-away perspective view of a portion of the air dryer body 70 and the oil filter 40 arranged thereon. Fig. 5 shows a partially broken-away perspective view of a portion of the air dryer body 70, of the air dryer cartridge 10, and the oil filter 40 having the configuration of Fig. 4. The oil filter 40 comprises an oil filter housing 41 and an oil filter element 42. The oil filter element 42 may be curved such that, in the installed state, the oil filter element 42 curves around the desiccant cartridge axis 21. The oil filter housing 41 comprises a tubular filter housing portion 43 that extends around a filter housing axis 59 from a first axial end 44 to a second axial end 45. In the installed state, the filter housing axis 59 may be aligned with (and may coincide with) the desiccant cartridge axis 21. The oil filter housing 41 further comprises an end cap 57 which may comprise a mating coupling structure 58 (such as one of a male or female coupling structure) for engagement with a coupling structure 56 (such as the other one of the female and male coupling structure) provided at the second axial end 57 of the tubular filter housing portion 43. The end cap 57 is air-impermeable. The tubular filter housing portion 43 may have a generally cylindrical or frustoconical shape. The tubular filter housing portion 43 is operative to retain the oil filter element 42 such that it curves around the tubular filter housing axis 59, e.g., in a cylindrical or frustoconical shape.

The tubular filter housing portion 43 may comprise an inner filter housing component 43a. The inner filter housing component 43a may comprise a plurality of apertures 55a that form an oil filter gas inlet through which the gas flow 61 can pass to the oil filter element 42. The tubular filter housing portion 43 may comprise an outer filter housing component 43b. The outer filter housing component 43b may comprise a plurality of further apertures 55b that form an oil filter gas outlet through which the gas flow 61 can pass from the oil filter element 42 to the cartridge gas inlet 32. The apertures 55a and the further apertures 55b may be aligned with each other (e.g., such that for any aperture 55a there is a further aperture 55b aligned with the aperture 55a), both along the filter housing axis 59 and along a circumferential direction around the filter housing axis 59.

Various modifications may be implemented. For illustration, the end cap 57 and the tubular filter housing portion 43 may be integrally formed.

The oil filter 40 comprises a sealing structure configured for sealing (e.g., substantially air-tight) abutment on the desiccant container 20 and/or the air dryer body 70. The sealing structure may comprise a seal 46 configured to sealingly abut on an inner surface 73 of an air dryer body passage portion 72 of the air dryer 70. The passage portion 72 may define a body passage 71 configured to supply fluid to an oil filter passage 40' at the first axial end 44. The air dryer body 70 may comprise a rib structure 74 at the body passage 71. The seal 46 may comprise a recess 47 formed in an outer circumference of the oil filter housing 41 and an O-ring sealing member 48 received by the recess 47. The recess 47 may be provided in an outer end portion surface 49 of the oil filter housing 41. The sealing structure may comprise a further seal 50 configured to seal against the wall 25 of the desiccant container 20. The further seal 50 may comprise a first ridge 51 radially projecting from the tubular filter housing portion 43 along the circumference around the filter axis housing 41, a second ridge 52 radially projecting from the tubular filter housing portion 43 along the circumference around the filter axis housing 41, a further recess 53 defined between the first ridge 51 and the second ridge 52, and a further O-ring sealing member 54 received by the further recess 53. The seal 46 and the further seal 50 may be configured to prevent a bypass flow that would circumvent the oil filter element 42 when the oil filter 40 is installed, and/or to prevent a backflow from the oil filter receptacle towards the inlet passage 71. In pumping mode operation, the gas flow received by the oil filter at the oil filter inlet 40' passes through the oil filter element 42 and the apertures 55, which form the oil filter gas outlet.

The oil filter 40 may be configured such that it is mechanically secured in position on the air dryer body 70 by the air dryer cartridge 20. For illustration, the air dryer may be configured such that, when the oil filter 40 is installed, the air dryer cartridge 20 secures the oil filter 40 on a shoulder 75 of the air dryer body 70 in a form fit and/or force fit (e.g., friction fit). As also illustrated in Fig. 5, the wall 25 of the desiccant container 20 may comprise the wall engagement structure 29 to secure the wall 25 to the further wall portion 24 by means of a form fit and/or other securement structure. As previously mentioned, other implementations may be used in further embodiments. For illustration, the wall 25 may be formed integrally with at least the adjacent further wall 24. For further illustration, attachment techniques other than a form fit may be used, such as use of an adhesive or other fasteners, friction fit, force fit, etc.

As illustrated in Fig. 5, the shapes of the oil filter 40 and of the wall 25 forming the oil filter receptacle 31 are matched to each other in such a manner that the oil filter 40, if provided, is separated from the wall 25 by a gap when inserted into the oil filter receptacle 31, with this gap being small compared to, e.g., the gap 34. The oil filter 40 and the wall 25 may be configured such that, in the installed state of the oil filter 40, the end cap 57 of the oil filter 40 curves along the curved end wall portion 57 of the wall 25.

In addition to or as an alternative to mechanically securing the oil filter 40 by the air dryer cartridge 10, the oil filter 40 may be configured to be secured by means of a thread or another force-fitting engagement mechanism and/or form-fit.

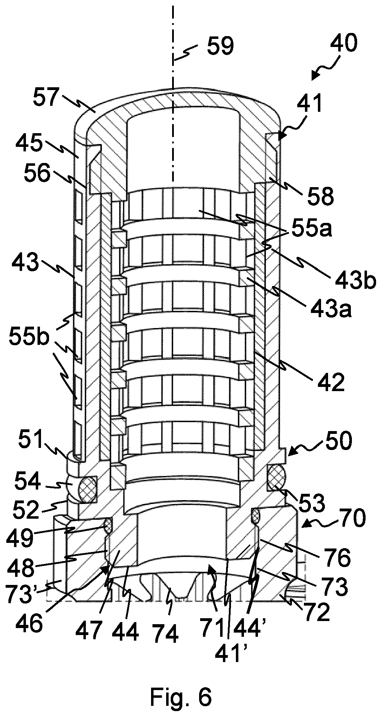

Fig. 6 shows a partially broken-away perspective view of a portion of an air dryer body 70 and an oil filter 40 arranged thereon, wherein the oil filter 40 comprises a retaining structure 44' at the first axial end 44 to engage with a mating retaining structure 76 of the air dryer body 70. The retaining structure 44' may comprise an external thread, and the mating retaining structure 76 may comprise an internal thread. Thus, the oil filter 40 may comprise an external thread configured to thread the oil filter to the air dryer body 70. Fig. 7 shows a partially broken-away perspective view of a portion of the air dryer body 70, of the air dryer cartridge 10, and the oil filter 40 having the configuration of Fig. 6. Other features of the air dryer body 70, air dryer cartridge 10, and/or oil filter 40 correspond to those explained with reference to Fig. 4 and Fig. 5.

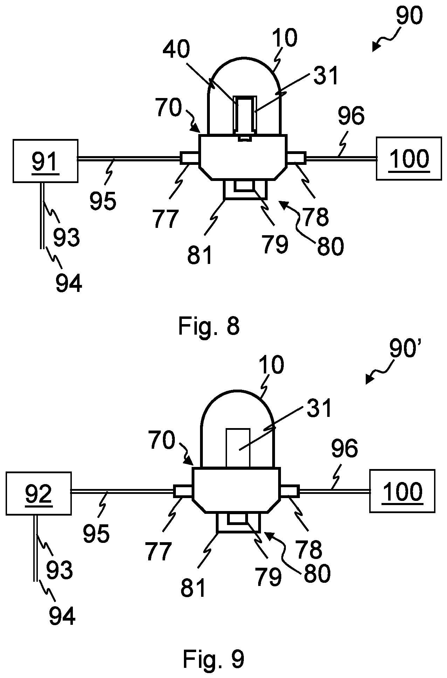

Fig. 8 is a schematic representation of a pneumatic system 90 comprising an air dryer 80. The air dryer 80 comprises the air dryer cartridge 10 and the oil filter 40 according to an embodiment. The air dryer 80 comprises an air dryer inlet port 77, an air dryer outlet port 78, and an air dryer exhaust port 79. A silencer 81 may be provided at the air dryer exhaust port 79. The air dryer 80 is configured to communicate, via an internal conduit of the air dryer body 70, the air dryer inlet port 77 with the body passage 71 in which the oil filter passage 40' is arranged. The air dryer 80 is configured to communicate, via another internal conduit of the air dryer body 70, the air dryer cartridge gas outlet (that receives the gas flow from the passages in the gap 34) with the air dryer outlet port 78. The air dryer 80 is configured to exhaust gas through the exhaust port 79, e.g., during regeneration.

The pneumatic system 90 comprises a compressor 91 that may be an oil-lubricated compressor. The compressor 91 is configured to compress ambient air sucked in via an intake opening 94 that may be provided on an intake conduit 93. The intake conduit 93 may be directly connected to the compressor 91. The pneumatic system 90 comprises a supply line 95 directly or indirectly connected to the compressor 91 and the air dryer inlet port 77. The pneumatic system 90 comprises a consumer line 96 directly connected to the air dryer outlet port 78 and a pneumatic consumer system 100 that comprises one or several pneumatic consumers.

The pneumatic system 90 is configured such that, in pumping mode operation, the compressor 91 provides compressed air to the air dryer 80, and the air dryer 80 provides the compressed air with reduced humidity to the pneumatic consumer system 100. The pneumatic system 90 may be configured such that, in regeneration mode operation, the compressor 91 can be stopped, the desiccant 39 (and optionally also the filter element 42) is regenerated by a flow from the port 78 through the air dryer to the exhaust port 79, and the gas flow is exhausted through the exhaust port 79.

A technical effect provided by the air dryer cartridge 10 is that is operative to reduce air humidity of a gas flow even if the oil filter receptacle 31 is free of the oil filter 40, i.e., even when the air dryer cartridge 10 is used without the oil filter 40.

Fig. 9 is a schematic representation of another pneumatic system 90' comprising an air dryer 80. The air dryer 80 comprises the air dryer cartridge 10 according to an embodiment. The pneumatic system 90' comprises a further compressor 92 which is not oil-lubricated. Thus, the air dryer 80 has a configuration in which the air dryer cartridge 10 is assembled with the air dryer body 70, but no oil filter 40 is assembled. Other aspects as regards the configuration, structure, and operation correspond to those previously discussed.

The air dryer cartridge 10 is configured such that it provides the oil filter receptacle 31 that allows the oil filter 40 to be mounted, without significantly increasing construction space of the air dryer cartridge 10. This renders the air dryer cartridge 10 and, if provided, the oil filter 40 useful in association with a dual cartridge air dryer (which is also referred to as twin cartridge air dryer in the art).

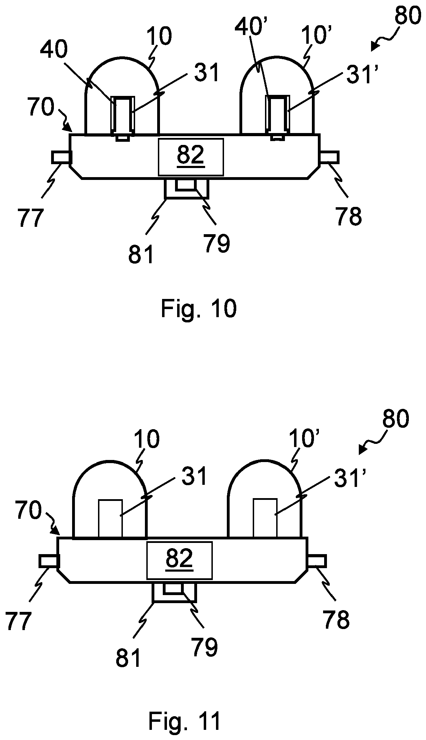

Fig. 10 is a schematic representation of an air dryer 80 configured as a dual cartridge air dryer 80 for use with an oil-lubricated compressor. Fig. 11 is a schematic representation of the air dryer 80 configured as a dual cartridge air dryer for use with a compressor that is not oil-lubricated. The air 80 dryer comprises the air dryer body 70. The air dryer 80 comprises an air dryer cartridge 10 threaded to the air dryer body 70. The air dryer 80 comprises a further air dryer cartridge 10' threaded to the air dryer body 70. The air dryer body 70 comprises a switching valve 82 configured to allow one of the air dryer cartridge 10 and the further air dryer cartridge 10' to be selected for drying air in pumping mode operation or for regeneration in regeneration mode operation. To configure the air dryer 80 for use with an oil-lubricated compressor 91, the an oil filter 40 is installed so as to project into the oil filter receptacle 31 of the air dryer cartridge 10 and a further oil filter 40' is installed so as to project into a further oil filter receptacle 31' of the further air dryer cartridge 10 (Fig. 10). To configure the air dryer 80 for use with a compressor 92 that is not oil-lubricated, the oil filter 40 and the further oil filter 40' need not be installed (Fig. 11).

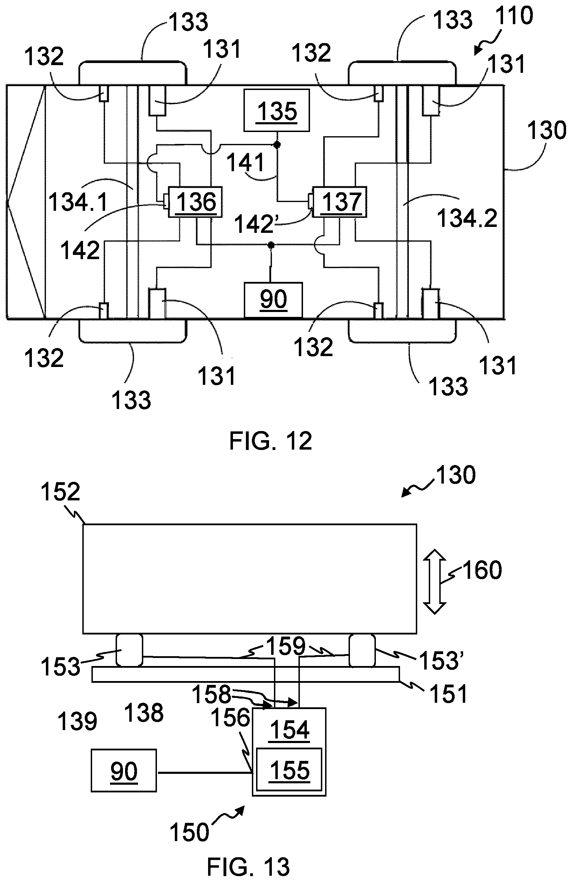

Fig. 12 shows a schematic representation of a vehicle 130 comprising a pneumatic system 110. The pneumatic system 110 may be configured as a braking system or electronic braking system (EBS). The pneumatic system 110 configured as a braking system or EBS comprises a front axle modulator 136 and/or a rear axle modulator 137.

The vehicle 130 comprises a front axle 134.1 and a rear axle 134.2 or several rear axles. The vehicle 130 comprises several wheel 133. The vehicle 130 comprises one or several sensors, such as wheel speed sensors 132 associated with the several wheels 133. The pneumatic system 110 comprises several brake cylinders 131. The pneumatic system 110 comprises control electronics 135, such as a control unit 135, which is coupled to the front axle modulator 136 and the rear axle modulator 137 via at least one electric connection 141. The front axle modulator 136 comprises an electric interface 142 for communicatively interfacing with the control electronics 135. The rear axle modulator 137 comprises a further electric interface 142' for communicatively interfacing with the control electronics 135. The front axle modulator 136 has at least one discharge port in fluid communication with brake cylinders 131 for front axle wheels. The rear axle modulator 137 has at least one further discharge port in fluid communication with brake cylinders 131 for rear axle wheels. The pneumatic system 110 comprises a supply system that comprises at least one air dryer cartridge 10, optionally at least two air dryer cartridges 10, 10', according to an embodiment. The supply system may be the supply system 90 that comprises at least one oil filter, optionally at least two oil filters 40, 40', according to an embodiment.

Fig. 13 is a schematic representation of a vehicle 130 which comprises a pneumatic vehicle system 150 configured as an electro-pneumatic cabin leveling system. The electro-pneumatic cabin leveling system 150 is configured to change an inclination of a cabin 152 of the vehicle 130 relative to a chassis 151. The pneumatic system 150 comprises at least a pneumatic adjustment element 153 and a further pneumatic adjustment element 153', each of which is configured to change the inclination of the cabin 152. The pneumatic adjustment element 153 and the further pneumatic adjustment element 153' can be configured as inflatable gas bags. The pneumatic system 150 comprises an electropneumatic control device 154. The electropneumatic control device 154 comprises at least two solenoid valves 155 (with the system of at least two solenoid valves being indicated merely schematically in Fig. 13). The electropneumatic control device 154 is arranged to selectively energize the at least two solenoid valves 155 such that compressed air received at a compressed gas inlet 156 is supplied to one or both of the pneumatic adjusting element 153 and the further pneumatic adjusting element 153' and/or that one or both of the pneumatic adjusting element 153 and the further pneumatic adjusting element 153' is vented via an exhaust port of the electropneumatic control device 154. The electropneumatic control device 154 comprises several consumer ports 158, each of which is connected to one of the pneumatic adjusting elements 153, 153' via a connecting line 159. The configuration of the pneumatic system 150 allows different parts of the cabin 152 to be adjusted along an adjustment path 160 in order to adjust the inclination and/or height so that the cabin 152 has a desired attitude relative to a gravity direction. For illustration, the pneumatic system 150 may be configured to allow the cabin 152 to be oriented with its floor perpendicular to a direction of gravity when the chassis 151 is inclined. The solenoid valves 155 can be actuated in a conventional manner, responsive to a mechanical linkage, signals or data received by the electropneumatic control device 154. The pneumatic system 150 comprises a supply system that comprises at least one air dryer cartridge 10, optionally at least two air dryer cartridges 10, 10', according to an embodiment. The supply system may be the supply system 90 that comprises at least one oil filter, optionally at least two oil filters 40, 40', according to an embodiment.

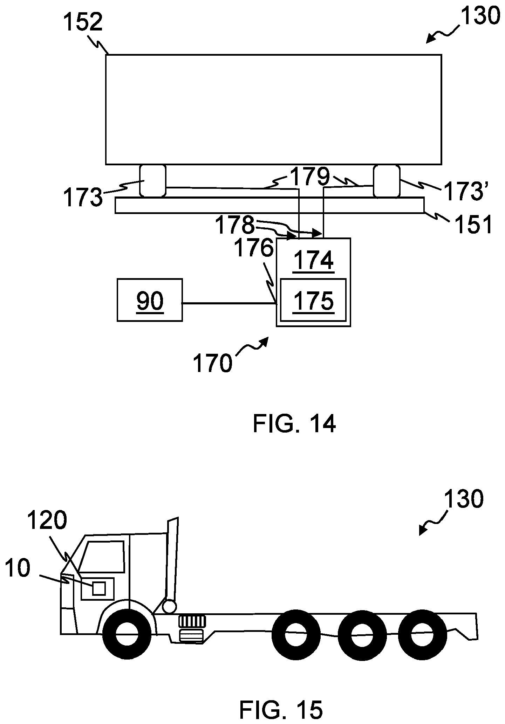

Fig. 14 is a schematic representation of a vehicle 130 having a pneumatic system 170 configured as an electro-pneumatic shock absorber system. The pneumatic system 170 comprises at least a pneumatic shock absorber 173 and a further pneumatic shock absorber 173', which are each arranged between a chassis 151 and a cab 152. The pneumatic shock absorber 173 and the further pneumatic shock absorber 173' can be configured as gas bags whose pressure is adjustable. The pneumatic system 170 comprises an electropneumatic control device 174. The electropneumatic control device 174 comprises at least one solenoid valve or several solenoid valves 175 (which are shown merely schematically as a block in Fig. 14). The electropneumatic control device 174 is configured to selectively energize the at least one solenoid valve or the several solenoid valves 175 such that compressed gas received at a gas supply port is discharged to the pneumatic shock absorber 173 and the further pneumatic shock absorber 173' and/or that the pneumatic shock absorber 173 and the further pneumatic shock absorber 173' can be vented via an exhaust port of the electropneumatic control device 174. The electropneumatic control device 174 comprises at least one consumer port 178, which is connected to the pneumatic shock absorber 173 and the further pneumatic shock absorber 173' via at least one connecting line 179. This configuration allows the pressure in the shock absorbers 173, 173' to be controlled using open-loop control and/or closed-loop control. The pneumatic system 170 comprises a supply system that comprises at least one air dryer cartridge 10, optionally at least two air dryer cartridges 10, 10', according to an embodiment. The supply system may be the supply system 90 that comprises at least one oil filter, optionally at least two oil filters 40, 40', according to an embodiment.

Fig. 15 shows a schematic representation of a vehicle 130 configured as a commercial vehicle. The commercial vehicle comprises at least one pneumatic system 120 (such as a gas supply system, a braking system, an EBS, a levelling system, and/or a shock-absorber system) comprising one or several air dryer cartridge(s) 10 and/or one or several oil filter(s) 40 according to an embodiment. The pneumatic system 120 may comprise any one or any combination of a supply system for supplying compressed air; a levelling system; a suspension system; a braking system.

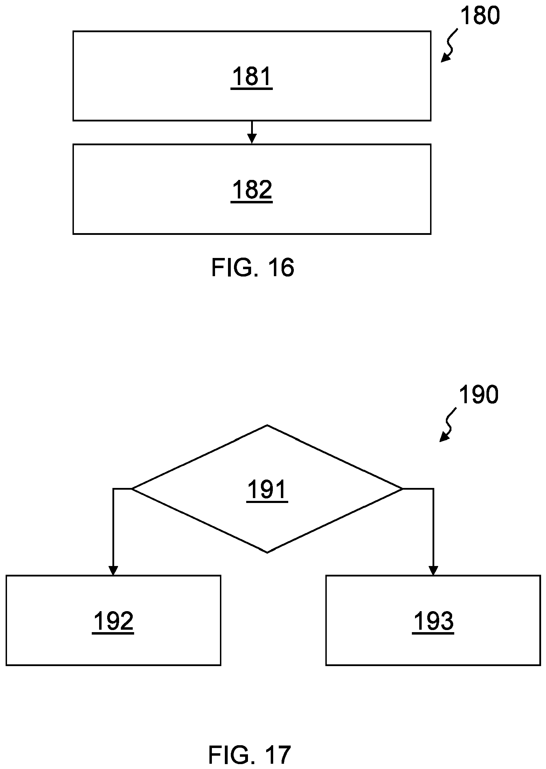

Fig. 16 is a flow chart of a method 180 of assembling an air dryer for a pneumatic system 110, 120, 150, 170 for a vehicle 130. The method 180 may be performed automatically by or using an assembly system.

The method 180 comprises a process block 181 of attaching the oil filter 140 to the air dryer body 70. Attaching the oil filter 140 to the air dryer body 70 may comprise threadingly engaging the oil filter 40 with the air dryer body 70.

The method 180 comprises a process block 182 of attaching the air dryer cartridge 10 to the air dryer body 70 such that at least a portion of the oil filter 40 is received in an oil filter receptacle 31 formed by a wall 25 of a desiccant container 20 of the air dryer cartridge 10. Attaching the air dryer cartridge 10 may comprise inserting the oil filter 40 through the oil filter insertion opening 26 in the cartridge end structure 12 for positioning the oil filter 40.

Fig. 17 is a flow chart of a method 190 of assembling an air dryer for a pneumatic system 110, 120, 150, 170 for a vehicle 130. The method 180 may be performed automatically by or using an assembly system.

The method 190 comprises a decision block 191 of determining whether the air dryer is to be used with an oil-lubricated compressor or a compressor that is not an oil-lubricated compressor. The decision block 191 may comprise receiving a user input or reading electronic configuration data for the air dryer to be assembled.

The method 190 comprises a process block 192 that is performed responsive to determining that the air dryer is to be used with an oil-lubricated compressor. Process block 192 comprises assembling the oil filter 140 such that at least a portion of the oil filter 40 is received in the oil filter receptacle 31 formed by the wall 25 of the desiccant container 20 of an air dryer cartridge 10. Attaching the air dryer cartridge 10 may comprise inserting the oil filter 40 through the oil filter insertion opening 26 in the cartridge end structure 12 for positioning the oil filter 40.

The method 190 comprises a process block 193 that is performed responsive to determining that the air dryer is to be used with a compressor that is not oil-lubricated. Process block 193 comprises attaching the air dryer cartridge 10 to the air dryer body 70 such that the oil filter receptacle 31 remains free of the oil filter 40.

The assembly methods 180, 190 may be performed using the air dryer cartridge 10 and/or the oil filter 40 according to any aspect or embodiment.

Fig. 20 is a flow chart of a method 200 of providing gas to at least one pneumatic consumer of a vehicle (e.g., of a commercial vehicle 130).

The method comprises a process block 201 of receiving a gas flow 61 by the air dryer 80 which comprises the air dryer cartridge 10. The air dryer 80 may optionally comprise the oil filter 40.

The method 200 comprises a process block 202 of passing, in pumping mode, the gas flow 61 through the oil filter receptacle 31 and into the desiccant 39 contained in the desiccant container 20 to provide the gas flow to the at least one pneumatic consumer.

While embodiments have been described with reference to the drawings, modifications and alterations may be implemented in other embodiments.

For illustration, while embodiments have been described in association with dual cartridge air dryers, the invention is not limited to dual cartridge air dryers. For further illustration, while embodiments have been described in which the wall 25 may be a separate component engaged with an adjacent wall portion 24 of the desiccant container, the wall 25 forming the oil filter receptacle may be integrally formed with the further wall portion 24 (and optionally also with the outer circumferential wall 22 and/or the end wall 23) using techniques such as molding, ultrasonic welding, or other techniques. The invention may be applied to a variety of pneumatic vehicle systems, including gas supply systems operative to perform an air dryer regeneration, without being limited thereto.

Various effects and advantages are attained by embodiments of the invention. Embodiments provide improved air dryer components that allows an air dryer cartridge to be selectively used in association with an oil filter, while providing operability also when the oil filter is not installed and while providing ease of installation.

### List of Reference Numerals (part of the description)

- 10: air dryer cartridge
- 10': further air dryer cartridge
- 11: outer cap
- 12: cartridge end structure
- 13: bias member
- 14: air dryer cartridge seal
- 20: desiccant container
- 21: desiccant container axis
- 22: outer desiccant container wall
- 23: end wall portion
- 24: further wall portion
- 25: wall defining oil filter receptacle
- 25a: first wall surface
- 25b: second wall surface
- 26: tubular wall portion
- 27: first tubular wall portion end
- 28: second tubular wall portion end
- 29: wall engagement structure
- 30: curved end wall portion
- 31: oil filter receptacle
- 32: cartridge gas inlet
- 32': through-openings
- 33: end structure wall
- 34: circumferential gap
- 35: mating wall engagement structure
- 36: oil filter insertion opening
- 39: desiccant bed
- 40: oil filter
- 40': further oil filter
- 41: oil filter housing
- 41': oil filter housing passage
- 42: oil filter element
- 43: tubular filter housing portion
- 43a: inner filter housing component
- 43b: outer filter housing component
- 44: first axial end of tubular filter housing portion
- 44': retaining structure
- 45: second axial end of tubular filter housing portion
- 46: seal
- 47: recess
- 48: O-ring
- 49: outer end portion surface
- 50: further seal
- 51: first ridge
- 52: second ridge
- 53: further recess
- 54: further O-ring
- 55a: apertures
- 55b: further apertures
- 56: coupling structure
- 57: end cap
- 58: mating coupling structure
- 59: filter housing axis
- 60: gas flow pattern
- 61: inlet gas flow
- 62: gas flow through air dryer cartridge
- 70: air dryer body
- 71: body passage
- 72: air dryer body portion
- 73: inner surface
- 73': outer surface
- 74: rib structure
- 75: shoulder
- 76: oil filter retaining structure
- 76': air dryer cartridge retaining structure
- 77: air dryer inlet port
- 78: air dryer outlet port
- 79: air dryer exhaust port
- 80: air dryer
- 81: silencer
- 82: switching valve
- 90: pneumatic system
- 90': pneumatic system comprising oil-free compressor
- 91: compressor
- 92: oil-free compressor
- 93: intake conduit
- 94: intake opening
- 95: supply line
- 96: consumer line
- 100: pneumatic consumer system
- 110: pneumatic system
- 120: pneumatic system
- 130: vehicle
- 131: brake cylinder
- 132: wheel speed sensor
- 133: wheel
- 134.1: front axle
- 134.2: rear axle
- 135: control electronics
- 136: front axle modulator
- 137: rear axle modulator
- 138: control valve
- 139: pressure reservoir
- 141: electric line
- 142: electric interface
- 150: electropneumatic levelling system
- 151: chassis
- 152: cabin
- 153: adjustment member
- 153': further adjustment member
- 154: electropneumatic control device
- 155: solenoid valve(s)
- 156: supply port
- 158: discharge port(s)
- 159: pneumatic consumer lines
- 160: levelling adjustment path
- 170: electropneumatic shock absorbing system
- 173: pneumatic shock absorber
- 173': further pneumatic shock absorber
- 174: electropneumatic control device
- 175: solenoid valve(s)
- 176: supply port
- 178: discharge port(s)
- 179: pneumatic consumer lines
- 180: method
- 181, 182: process blocks
- 190: method
- 191, 192, 193: process blocks
- 200: method
- 201, 202: process blocks

## Claims

1. An air dryer cartridge (10, 10'), comprising:
a desiccant container (20), wherein the desiccant container (20) has a container axis (21); and
a desiccant (39) contained in the desiccant container (20);
wherein the desiccant container (20) comprises a wall (25) forming an oil filter receptacle (31) recessed into the desiccant container (20), the wall (25) comprising a first wall surface (25a), a second wall surface (25b) offset from the first wall surface (25a) in a direction transverse to the first wall surface (25a), and a cartridge gas inlet (32) comprising through-openings (32') extending from the first wall surface (25a) to the second wall surface (25b) to allow a gas flow (61, 62) to pass, in pumping mode operation of the air dryer cartridge (10, 10'), from the oil filter receptacle (31) into the desiccant container (20), and
wherein the air dryer cartridge (10, 10') comprises an insertion opening (36) for insertion of at least a portion of an oil filter (40) into the oil filter receptacle (31).

2. The air dryer cartridge (10, 10') of claim 1,
wherein the wall (25) forming the oil filter receptacle (31) comprises a tubular wall portion (26) extending around the desiccant container axis (21), wherein the tubular wall portion (26) comprises the through-openings (32').

3. The air dryer cartridge (10, 10') of claim 2, wherein the desiccant container (20) comprises an outer wall portion (22) extending coaxially around the tubular wall portion (26).

4. The air dryer cartridge (10, 10') of any one of the preceding claims, wherein the wall (25) forming the oil filter receptacle (31) is in direct contact with the desiccant (39).

5. The air dryer cartridge (10, 10') of any one of the preceding claims, wherein the desiccant (39) circumferentially surrounds at least a portion of the oil filter receptacle (31).

6. The air dryer cartridge (10, 10') of any one of the preceding claims, wherein the desiccant container (20) comprises an axial end wall portion (23) extending transverse to the desiccant container axis (21) and a further axial end wall portion (24) extending transverse to the desiccant container axis (21), wherein the wall (25) forming the oil filter receptacle (31) extends from the further axial end wall portion (24) towards the axial end wall portion (23).

7. The air dryer cartridge (10, 10') of any one of the preceding claims, wherein the wall (25) forming the oil filter receptacle (31) is configured to
sealingly engage the oil filter (40) and/or
retain the oil filter (40).

8. An oil filter (40) for an air dryer (80), comprising:
an oil filter housing (41) comprising an oil filter inlet (55a) and an oil filter outlet (55b), the oil filter housing (41) having a filter housing axis (59);
an oil filter element (42) configured to remove oil from a gas flow (61, 62) passing from the oil filter inlet (55a) to the oil filter outlet (55b); and
a sealing structure (46, 50),
wherein the oil filter (40) is configured for insertion into an oil filter receptacle (31) of an air dryer cartridge (10, 10') of the air dryer (80), and
wherein the sealing structure (46, 50) extends circumferentially around the filter housing axis (59) and is configured to seal against a wall surface (25b) of the air dryer cartridge (10, 10') and/or against an air dryer body (70) of the air dryer (80).

9. The oil filter (40) of claim 8, wherein the oil filter element (42) is curved around the filter housing axis (59).

10. The oil filter (40) of claim 8 or claim 9, wherein the oil filter housing (41) comprises a tubular filter housing portion (43) that extends around the filter housing axis (59), wherein the tubular filter housing portion (43) comprises
an inner filter housing component (43a) comprising the oil filter inlet (55a), the oil filter inlet (55a) comprising apertures (55a) for passage of gas to the oil filter element (42), and
an outer filter housing component (43b) comprising the oil filter outlet (55b), the oil filter outlet (55b) comprising further apertures (55b) for passage of gas from the oil filter element (42) to the air dryer cartridge (10, 10').

11. The oil filter (40) of any one of claims 8 to 10, wherein the oil filter (40) comprises an oil filter retaining structure (44') configured to engage with the air dryer cartridge (10, 10') and/or the air dryer body (70).

12. The oil filter (40) of any one of claims 8 to 11, wherein the oil filter (40) is configured for insertion into the oil filter receptacle (31) of the air dryer cartridge (10, 10') of any one of claims 1 to 7.

13. A kit, comprising the air dryer cartridge (10, 10') of any one of claims 1 to 7 and the oil filter (40) of any one of claims 8 to 12, wherein the oil filter (40) is configured to be installed with at least a portion of the oil filter (40) positioned in the oil filter receptacle (31) of the air dryer cartridge (10, 10').

14. An air dryer (80), comprising:
an air dryer body (70);
the air dryer cartridge (10, 10') of any one of claims 1 to 7, wherein the air dryer cartridge (10, 10') is attached to the air dryer body (70); and
the oil filter (40) of any one of claims 8 to 12, wherein the oil filter (40) is installed with at least a portion of the oil filter (40) positioned in the oil filter receptacle (31) of the air dryer cartridge (10, 10').

15. A method of assembling an air dryer (80), the method comprising:
attaching an oil filter (40) to an air dryer body (70), and
attaching an air dryer cartridge (10, 10') to the air dryer body (70) such that at least a portion of the oil filter (40) is received in an oil filter receptacle (31) formed by a wall (25) of a desiccant container (20) of the air dryer cartridge (10, 10').
